# EUROPÄISCHE PATENTSCHRIFT

(11) **EP 2 520 813 B1**
(45) Veröffentlichungstag und Bekanntmachung des Hinweises auf die Patenterteilung: **25.05.2016**
(21) Anmeldenummer: 12152674.3
(22) Anmeldetag: 26.01.2012
(51) Int. Cl.: F16C 3/03, F16N 21/02, F16D 3/06, F16N 7/00

(54) **Zentralschmierung von Gelenkwellen**
Central lubrication of driveshafts
Lubrification centrale d'arbres de transmission

(30) Priorität: 06.05.2011 DE 102011050166
(43) Veröffentlichungstag der Anmeldung: 07.11.2012
(73) Patentinhaber: GKN Walterscheid GmbH, 53797 Lohmar (DE)
(72) Erfinder: Bürling, Uwe, 53773 Hennef (DE); Carstensen, Bernd, 53809 Ruppichteroth (DE)
(74) Vertreter: Müller, Thomas Michael

(56) Entgegenhaltungen:
- US-A- 1 973 702
- US-A- 3 242 695
- US-A- 4 819 755
- US-A1- 2001 007 831

## Beschreibung

Die Erfindung betrifft eine Zentralschmierung zum Schmieren einer Teleskopwelle, umfassend eine Schmiervorrichtung und ein inneres Profilrohr der Teleskopwelle, in welches die Schmiervorrichtung einsetzbar ist und das zumindest einen Zuführkanal zum Zuführen von Schmiermittel zu den zu schmierenden Bereichen der Teleskopwelle aufweist,
wobei die Schmiervorrichtung ein Einfüllelement zum Zuführen von Schmiermittel in die Schmiervorrichtung, ein Abgabeelement zur Zuteilung von Schmiermittel an die zu schmierenden Bereiche der Teleskopwelle und einen ersten Schmiermittelkanal zwischen dem Einfüllelement und dem Abgabeelement aufweist.

Eine Zentralschmierung für eine Teleskopwelle zeigt die DE 42 37 176 C1, bei der die Schmiervorrichtung zwei Formstücke mit jeweiligen Anschlussstutzen aufweist. Das erste Formstück ist über zwei endseitige Konusstücke dichtend in diametral sich gegenüberliegenden Durchbrüchen des inneren Schiebeprofils gehalten. Das zweite Formstück ist in Bereich der Gelenkgabel des inneren Schiebeprofils in dieses eingesetzt. Das zweite Formstück ist nach außen hin mit einem Schmiernippel versehen. Über den jeweiligen Anschlussstutzen sind die beiden Formstücke mit einem Schlauch zur Durchleitung von Schmiermittel verbunden.

Die DE 601 20 815 T2 zeigt ein Fettschmiersystem innerhalb einer inneren Hohlwelle einer Teleskopwelle mit zwei axial beabstandeten Blöcken zwischen denen zwei parallele Rohre verlaufen. Der ersten Block ist mit einem Schmiernippel ausgestattet. Der zweite Block ist über zwei Hohlstifte in Position gehalten, indem diese in dem zweiten Block einsitzen und in zwei diametral gegenüberliegende Löcher in der Wandung der inneren Hohlwelle eingreifen. Über die Hohlstifte kann Schmiermittel nach radial außen gelangen.

Die DE 199 62 212 A1 offenbart eine Schmiereinrichtung für teleskopische Wellen mit zueinander verschiebbaren Rohrabschnitten. In einem inneren Rohrabschnitt ist zum Einfüllen von Fett eine Fettmuffe angeordnet. Ferner ist zur Abgabe des Fetts ein Fettverteilerelement im inneren Rohrabschnitt vorgesehen und mit diesem verbunden. Die Fettmuffe und das Fettverteilerelement sind über ein Verbindungsröhrchen miteinander verbunden. Das Verteilerelement weist zwei Abschnitte auf. Einer der Abschnitte ist im Innenrohr aufgenommen und weist einen mittigen Durchgang für das Fett auf. Der andere Abschnitt des Verteilerelements ist mit vermindertem Spiel im Innenprofil eines Außenrohrteils der teleskopischen Welle verschiebbar angeordnet und weist einen radialen Durchgangsweg auf, der mit dem mittigen Durchgang verbunden ist und Fett zwischen die beiden teleskopierbaren Rohrabschnitte verteilt.

Dokument US 1 973 702 zeigt eine zentrale Schmierung zum Schmieren einer Teleskopwelle. Die Schmiervorrichtung ist in einer Innenwelle der Teleskopwelle selbst ausgebildet und weist Zuführkanäle zum Zuführen von Schmiermittel zu zu schmierenden Bereichen der Teleskopwelle auf. In einer Außenwelle der Teleskopwelle ist ein entfernbarer Stopfen vorgesehen, durch den in den Innenraum der Teleskopwelle Fett eingefüllt werden kann. Die Zuführkanäle des Innenrohrs kommunizieren mit dem Innenraum des Außenrohrs und weisen radial verlaufende Schmiermittelverteilerkanäle auf, über die die zu schmierenden Bereiche der Verschiebeanordnung geschmiert werden.

Ausgehend hiervon ist die Aufgabe der vorliegenden Erfindung eine Zentralschmierung mit einer Schmiervorrichtung bereitzustellen, die einfach in eine Teleskopwelle einzusetzen ist.

Die Aufgabe wird gelöst durch eine Zentralschmierung zum Schmieren einer Teleskopwelle, umfassend eine Schmiervorrichtung und ein inneres Profilrohr der Teleskopwelle, in welches die Schmiervorrichtung einsetzbar ist und das zumindest einen Zuführkanal zum Zuführen von Schmiermittel zu den zu schmierenden Bereichen der Teleskopwelle aufweist, wobei die Schmiervorrichtung ein Einfüllelement zum Zuführen von Schmiermittel in die Schmiervorrichtung, ein Abgabeelement zur Zuteilung von Schmiermittel an die zu schmierenden Bereiche der Teleskopwelle und einen ersten Schmiermittelkanal zwischen dem Einfüllelement und dem Abgabeelement aufweist und
wobei das Abgabeelement eine umlaufende Außennut aufweist, die zusammen mit dem inneren Profilrohr einen umlaufenden Verteilerkanal bildet, der sowohl mit dem ersten Schmiermittelkanal als auch mit dem Zuführkanal kommuniziert.

Von Vorteil bei dieser Ausbildung ist, dass durch den umlaufenden Verteilerkanal, der durch die umlaufende Außennut und das innere Profilrohr gebildet wird, der Zuführkanal in dem inneren Profilrohr an einer beliebigen Stelle auf dem Umfang des inneren Profilrohrs sein kann, solange er in der Querschnittsebene der Außennut liegt. Eine umfängliche Ausrichtung bzw. eine Ausrichtung in radialer Richtung des Abgabeelements und des innere Profilrohrs bzw. dessen Zuführkanal aufeinander muss demnach nicht im Hinblick auf den Austritt von Schmiermittel aus dem Abgabeelement und den Durchtritt durch das innere Profilrohr erfolgen, da das Schmierfett über den gesamten Umfang im Bereich der Außennut des Abgabeelements austreten bzw. in den Zuführkanal des inneren Profilrohrs eintreten kann. Es muss lediglich eine umfängliche Ausrichtung bzw. eine Ausrichtung in radialer Richtung des Abgabeelements und des innere Profilrohrs im Hinblick auf die Profilierung des inneren und äußeren Profilrohrs zueinander erfolgen, da das Abgabeelement diese Profilierung ebenfalls aufweist. In welchem Umfangsbereich allerdings der Zuführkanal in dem inneren Profilrohr angeordnet ist, kann frei festgelegt werden. Insbesondere können mehrere Zuführkanäle über dem Umfang des inneren Profilrohrs vorgesehen werden, deren umfängliche Position wiederum frei gewählt werden kann. Bevorzugt sind zwei zumindest annähernd diametral entgegensetzt angeordnete Zuführkanäle in dem inneren Profilrohr vorgesehen.

Unter kommunizieren des umlaufenden Verteilerkanals sowohl mit dem ersten Schmiermittelkanal als auch mit dem Zuführkanal ist eine Austausch bzw. eine fluide Verbindung zwischen diesen Kanälen zu verstehen.

In Ausgestaltung der Erfindung ist die umlaufende Außennut bezogen auf den Zuführkanal axial fluchtend ausgerichtet ist. Hierdurch wird sichergestellt, dass die Radialebene, in der die umlaufende Außennut auf dem Abgabeelement liegt, und die Radialebene, in der der Zuführkanal auf dem inneren Profilrohr liegt, zumindest annähernd zusammenfallen bzw. aufeinanderliegen.

Insgesamt ist durch diese Ausgestaltung die Zuleitung von Schmiermittel an zu schmierenden Bereiche der Teleskopwelle sichergestellt, nämlich ausgehend von der umlaufenden Außennut über den Zuführkanal an den Überlappungsbereich zwischen dem inneren und dem äußeren Profilrohr. Dieser Überlappungsbereich, auch Überdeckungsbereich genannt, kann somit bei zusammengebauter, d.h. ineinander gesteckter, Teleskopwelle gefettet bzw. geschmiert werden, ohne dass das innere und äußere Profilrohr auseinandergezogen werden müssen.

Bevorzugt ist das Einfüllelement als Schmiernippel gestaltet, der vorzugsweise in dem inneren Profilrohr aufgenommen ist. Der Schmiernippel kann in das innere Profilrohr geschraubt, gepresst oder geschlagen sein. Von Vorteil ist, dass als Schmiernippel ein kostengünstiges und ohne weiteres verfügbares Normteil Verwendung finden kann. Zusätzlich oder alternativ kann das Einfüllelement auch in einer Rillengabel aufgenommen sein, welche an einem axialen Ende an dem inneren Profilrohr gehalten ist, bevorzugt mit einem Sicherungsstift.

In konkreter Ausgestaltung ist eine Einfüllanordnung vorgesehen, die das Einfüllelement, bevorzugt in Gestalt eines Schmiernippels, und ein Aufnahmeelement umfasst. Das Aufnahmeelement dient vorteilhafterweise dazu, eine geeignete Verbindung zwischen dem Einfüllelement und dem ersten Schmiermittelkanal bereitzustellen. Des Weiteren stellt das Aufnahmeelement eine Richtungsänderung zwischen dem Einfüllelement, welches als Schmiernippel bevorzugt in radialer Richtung in dem inneren Profilrohr aufgenommen ist, und dem ersten Schmiermittelkanal sicher, welcher bevorzugt parallel zu einer Längsausrichtung der Teleskopwelle in dem inneren Profilrohr verläuft.

Bei einer Ausführungsform der Erfindung weist das Aufnahmeelement eine umlaufende Außennut auf, die zusammen mit dem inneren Profilrohr einen umlaufenden Aufnahmekanal bildet, der sowohl mit dem ersten Schmiermittelkanal als auch mit dem Einfüllelement kommuniziert. Vorteilhaft ist dies zunächst, da hierbei das Aufnahmeelement und das Abgabeelement in wesentlichen gleich aufgebaut sind, so dass die Fertigung vereinfacht ist. Des Weiteren kommen auch hier die Vorteile zum Tragen, die zuvor zu dem Abgabeelement beschrieben wurden.

In weiterer Konkretisierung ist das Aufnahmeelement zu beiden axialen Seiten der umlaufenden Außennut gegenüber der Innenfläche des inneren Profilrohrs abgedichtet. Hierdurch ist sichergestellt, dass der Aufnahmekanal, welcher von der umlaufenden Außennut und dem inneren Profilrohr gebildet wird, abgedichtet ist und kein Schmiermittel unbeabsichtigt austreten kann. Zur Abdichtung können Dichtringe zu beiden Seiten der umlaufenden Außennut vorgesehen sein. Alternativ kann eine Abdichtung durch eine gezielte Anformung des Aufnahmeelements an die Innenfläche des inneren Profilrohrs erfolgen.

Bevorzugt greift das Einfüllelement in die umlaufende Außennut des Aufnahmeelements ein, um das Aufnahmeelement gegenüber dem inneren Profilrohr axial zu arretieren. Hierdurch wird mit einfachen Mitteln eine axiale Arretierung der gesamten Schmiermittelvorrichtung bezüglich des inneren Profilrohrs erreicht. Von Vorteil ist weiterhin, dass dieser Eingriff des Einfüllelements in die umlaufende Außennut keine besonderen Anforderung an die Maßhaltigkeit stellt. Grundsätzlich kann eine geringe Eingrifftiefe des inneren Endes des Einfüllelements in die umlaufende Außennut ausreichen. Weiterhin kann grundsätzlich auch eine geringe Eingriffsbreite des inneren Endes des Einfüllelements bezogen auf die Breite der umlaufenden Außennut ausreichen. Ein gewisses axiales Wandern des Aufnahmeelements in dem inneren Profilrohr kann unschädlich sein.

In Ausgestaltung der Erfindung verläuft in dem Aufnahmeelement eine Bohrung zur Durchleitung von Schmierstoff, zum Verbinden des Einfüllelements mit dem ersten Schmiermittelkanal. Bevorzugt verläuft diese Bohrung ausgehend von dem Grund der umlaufenden Außennut zu dem axialen Ende des Aufnahmeelements, das dem Abgabeelement zugewandt ist. Hierdurch ist sichergestellt, dass das Aufnahmeelement das Schmiermittel von dem Einfüllelement in Gestalt des Schmiernippels zu dem ersten Schmiermittelkanal weiterleiten kann. Ferner ist eine Bohrung fertigungstechnisch einfach herzustellen.

In weiterer Ausgestaltung der Erfindung ist das Abgabeelement zu beiden axialen Seiten der umlaufenden Außennut gegenüber der Innenfläche des inneren Profilrohrs abgedichtet ist. Als Vorteile sind die gleichen zu nennen, die zu der Abdichtung des Aufnahmeelements zu dessen beiden axialen Seiten der umlaufenden Außennut beschrieben wurden. Zur Abdichtung können ebenfalls Dichtringe oder alternativ eine Anformung des Abgabeelements an die Innenfläche des inneren Profilrohrs Verwendung finden.

In weiterer Ausgestaltung der Erfindung verläuft in dem Abgabeelement eine Bohrung zur Durchleitung von Schmierstoff, zum Verbinden des ersten Schmiermittelkanals mit dem Zuführkanal. Bevorzugt verläuft diese Bohrung ausgehend von dem Grund der umlaufenden Außennut zu dem axialen Ende des Abgabeelements, das dem Einfüllelement bzw. dem ersten Schmiermittelkanal zugewandt ist. Günstig ist hierbei der grundsätzlich gleiche Aufbau des Abgabeelements und des Aufnahmeelements mit der Erzielung gleicher Vorteile.

Bei einer weiteren Ausführungsform, die auch alle zuvor genannten Ausgestaltungsmerkmale der Erfindung aufweisen kann, ist ein zweiter Schmiermittelkanal zur Zuteilung von Schmierstoff an weitere zu schmierende Bereiche der Teleskopwelle vorgesehen, zum Verbinden des Abgabeelements mit den weiteren zu schmierenden Bereichen. In vorteilhafterweise kann hierdurch die Zentralschmierung modular erweitert werden.

In weiterer Konkretisierung ist in dem Abgabeelement eine Bohrung zur Durchleitung von Schmierstoff angeordnet ist, die ausgehend von der umlaufenden Außennut zu beiden axialen Ende des Abgabeelements verläuft, zum Verbinden des ersten Schmiermittelkanals mit dem Zuführkanal und dem zweiten Schmiermittelkanal. Bevorzugt verläuft diese Bohrung ausgehend von dem Grund der umlaufenden Außennut T-förmig zu den axialen Enden des Abgabeelements.

In einer Variante der Ausführungsform können die weiteren zu schmierenden Bereiche an einem Kreuzgelenk, insbesondere zwischen dem Zapfenkreuz und den Rillengabeln, angeordnet ist, welches mit einem äußeren Profilrohr verbunden ist. Hierdurch kann in vorteilhafterweise ein in der Regel vorhandenes Kreuzgelenk, welches üblicherweise einen eigenen Schmiernippel zum Abschmieren aufweist, an die Zentralschmierung angeschlossen werden.

Bevorzugt ist der zweite Schmiermittelkanal längenveränderlich, insbesondere spiralförmig oder elastisch ausgebildet ist. Hierdurch passt sich die Zentralschmierung bzw. die Schmiermittelvorrichtung selbständig an Längenänderung der Teleskopwelle im Betrieb an.

In weiterer Ausgestaltung der Erfindung sitzt das Abgabeelement über eine Spannhülse, welche in dem Zuführkanal des inneren Profilrohrs einsitzt und in die umlaufende Außennut des Abgabeelements eingreift, gegenüber dem inneren Profilrohr axial arretiert ist. In vorteilhafter Weise kann hierdurch eine weitere bzw. zusätzliche Arretierung der Schmiermittelvorrichtung gegenüber dem inneren Profilrohr erreicht werden. Alternativ kann die Spannhülse auch in die Bohrung des Abgabeelements nach radial innen eingreifen, welche zur Durchleitung von Schmiermittel dient.

Bevorzugte Ausführungsformen der Erfindung werden nachfolgend anhand der Figuren beschrieben. Hierin zeigen:
Figur 1 zeigt einen Längsschnitt durch eine erste Ausführungsform der erfindungsgemäßen Zentralschmierung
   a) in einem Längschnitt,
   b) in einem Querschnitt entlang der Schnittlinie B-B der Fig. 1a;
Figur 2 zeigt eine zweite Ausführungsform der erfindungsgemäßen Zentralschmierung;
Figur 3 zeigt einen Längsschnitt durch eine dritte Ausführungsform der erfindungsgemäßen Zentralschmierung;
Figur 4 zeigt einen Längsschnitt durch die erste Ausführungsform der erfindungsgemäßen Zentralschmierung in einer Variante.

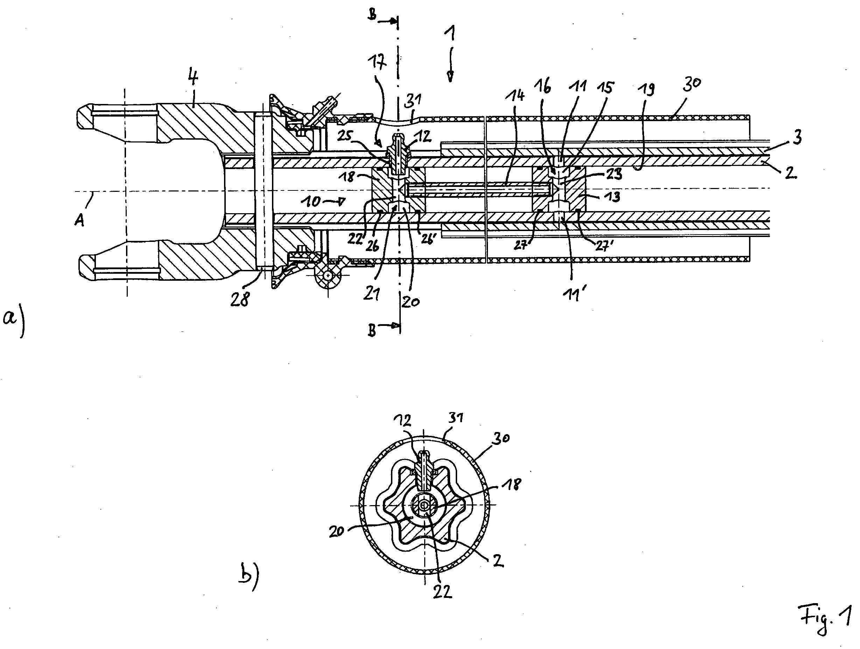

Die Figuren 1 bis 4 werden zunächst im Hinblick auf Übereinstimmungen der Ausführungsformen gemeinsam beschrieben. Hierbei erhält die erste Ausführungsform Bezugszeichen bis Ziffer 99, die zweite Ausführungsform Bezugszeichen bis Ziffer 199 und die dritte Ausführungsform Bezugszeichen bis Ziffer 299.

Gezeigt ist eine Gelenkwelle, die beispielsweise zum Antrieb eines landwirtschaftlichen Gerätes durch die Zapfwelle eines Traktors dient. An deren beiden Enden sind Kreuzgelenke angebracht, von denen das eine eine nicht dargestellte Rillengabel zur Verbindung mit der Zapfwelle und das andere eine ebenfalls nicht dargestellte Rillengabel zur Verbindung mit der Antriebswelle eines landwirtschaftlichen Geräts aufweist. Die inneren Rillengabeln 4, 4' sind jeweils mittels einer Spannhülse 28, 28' auf dem jeweiligen Profilrohr gehalten.

Die Gelenkwelle ist als Teleskopwelle 1, 101, 201 mit einem äußeren Profilrohr 3, 103, 203 und einem inneren Profilrohr 2, 102, 202 gestaltet. Die Profilrohre 2, 102, 202, 3, 103, 203 sind drehfest und längenverschieblich miteinander verbunden, so dass ein Drehmoment zwischen ihnen übertragen werden kann und die Gesamtlänge der Teleskopwelle 1, 101, 201 variiert werden kann. Die beiden Profilrohre 2, 102, 202, 3, 103, 203 besitzen einen von einer Kreisform abweichenden Querschnitt, so dass hierüber ein formschlüssiger Eingriff beider Profilrohre 2, 102, 202, 3, 103, 203 ineinander zur Drehmomentübertragung gewährleistet ist, wie dies in Figur 1 b zu erkennen ist. Zum Schutz beispielsweise der Bedienperson vor der drehenden Teleskopwelle 1, 101, 201 ist diese mit einem äußeren Schutzrohr 30, 130, 230 und einem nicht dargestellten inneren Schutzrohr versehen, die beide zum Längenausgleich teleskopisch ineinander gesteckt sind. Jedes Schutzrohr ist im Bereich des Anschlussflansches des jeweiligen Kreuzgelenks an dem äußeren bzw. inneren Profilrohr 2, 102, 202, 3, 103, 203 befestigt.

Die Schmiervorrichtung 10, 110, 210 ist entlang der Längsachse A des inneren Profilrohrs 2, 102, 202 in dieses eingeschoben bzw. eingesetzt. Die Schmiervorrichtung 10, 110, 210 weist eine Einfüllanordnung 17, 117, 217 mit einem Einfüllelement in Gestalt eines Schmiernippels 12, 112, 212 und einem Aufnahmeelement 18, 118, 218, ein Abgabeelement 13, 113, 213 und einen ersten Schmiermittelkanal 14, 114, 214, der die Einfüllanordnung 17, 117, 217 und das Abgabeelement 13, 113, 213 miteinander verbindet, auf. Über den Schmiermittelkanal 14, 114, 214 kann Schmiermittel zwischen der Einfüllanordnung 17, 117, 217 und dem Abgabeelement 13, 113, 213 befördert werden. Ferner stellt der erste Schmiermittelkanal 14, 114, 214 eine feste Verbindung zwischen der Einfüllanordnung 17, 117, 217 und dem Abgabeelement 13, 113, 213 in dem Sinne dar, dass über den ersten Schmiermittelkanal 14, 114, 214 Zug- und Druckkräfte zwischen der Einfüllanordnung 17, 117, 217 und dem Abgabeelement 13, 113, 213 übertragen werden können.

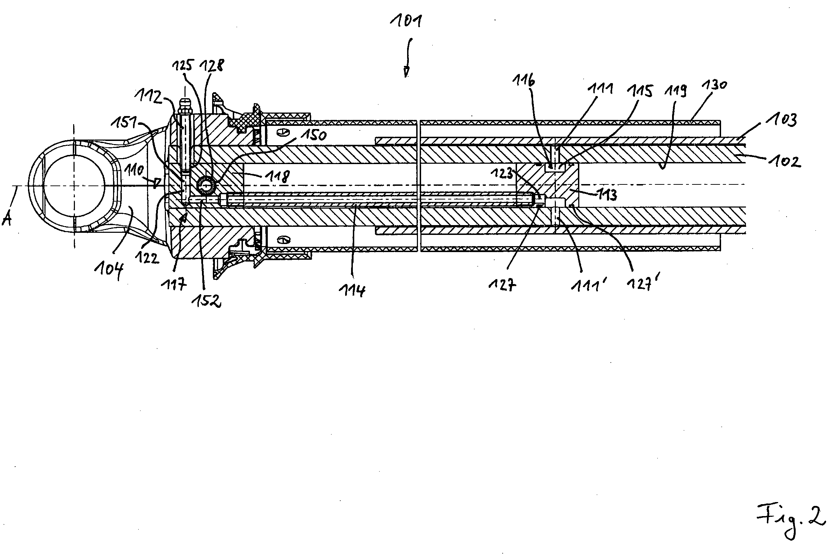

Das Aufnahmeelement 18, 118, 218 und das Abgabeelement 13, 113, 213 sind mit ihrer Außenkontur der Innenkontur des inneren Profilrohrs 2, 102, 202 angepasst, insofern sie auch als Kolben bezeichnet werden können, wie aus Figur 1 b ersichtlich. Die Außenkontur der beiden Elemente 18, 118, 218, 13, 113, 213 entspricht der formschlüssigen Profilierung zwischen dem äußeren Profilrohr 3, 103, 203 und dem inneren Profilrohr 2, 102, 202. Die Schmiervorrichtung 10, 110, 210 ist über das Einfüllelement in Form des Schmiernippels 12, 112, 212 in dem inneren Profilrohr 2, 102, 202 gehalten. Hierzu ist der Schmiernippel 12, 112, 212 mittels einer Schraubverbindung 25, 125, 225 in dem inneren Profilrohr 2, 102, 202 radial ausgerichtet gehalten. Radial außerhalb weist das äußere Schutzrohr 30, 130, 230 eine Zugangsöffnung 31, 131, 231 zu dem Schmiernippel 12, 112, 212 auf. Alternativ kann der Schmiernippel 12, 112, 212 auch eingepresst sein. Der Schmiernippel 12, 112, 212 greift mit seinem inneren Ende nach radial innen formschlüssig in das Aufnahmeelement 18, 118, 218 ein. Bei der Ausführungsform nach der Figur 2 kann alternativ vorgesehen sein, dass der Schmiernippel 112 mit einer der zuvor beschriebenen Verbindungen in der Rillengabel 104 gehalten ist.

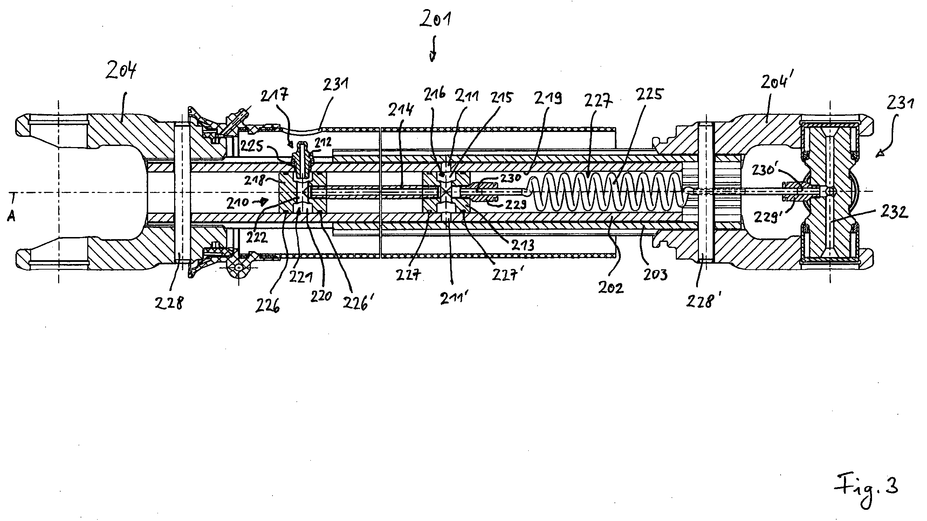

Bei den Ausführungsformen nach den Figuren 1 und 3 sind das Aufnahmeelement 18, 118, 218 und das Abgabeelement 13, 113, 213 weitestgehend symmetrisch gestaltet bezüglich einer vertikalen Symmetrieebene. Die bestehenden Unterschiede werden weiter unten beschrieben. Das Aufnahmeelement 18, 218 weist eine umlaufende Außennut 20, 220 auf, die zusammen mit der Innenfläche 19, 219 des inneren Profilrohrs 2, 202 einen ebenso umlaufenden Aufnahmekanal 21, 221 bildet. In die umlaufende Außennut 20, 220 greift der Schmiernippel 12, 212 nach radial innen formschlüssig ein. Das Abgabeelement 13, 213 weist eine umlaufende Außennut 15, 215 auf, die zusammen mit der Innenfläche 19, 219 des inneren Profilrohrs 2, 202 einen umlaufenden Verteilerkanal 16, 216 bildet. In dem Bereich des Verteilerkanals 16, 216 weist das innere Profilrohr 2, 202 zwei Zuführkanäle 11, 11', 211, 211' auf, über die das Schmiermittel von dem Verteilerkanal 16, 216 zu den zu schmierenden Bereichen zwischen dem inneren und dem äußeren Profilrohr 2, 202, 3, 203 gelangen kann und die als radial gerichtete Bohrungen gestaltet und diametral entgegengesetzt angeordnet sind. Alternativ kann die Richtung der Bohrungen auch einen anderen Verlauf haben und es kann auch nur eine Bohrung oder mehr als zwei Bohrungen über den Umfang des Profilrohrs 2, 202 vorgesehen sein.

Das Aufnahmeelement 18, 218 und das Abgabeelement 13, 213 können im Längsschnitt betrachtet infolge der jeweils umlaufenden Außennut 15, 215, 20, 220 als hantelförmig bezeichnet werden. Zu beiden axialen Seiten der umlaufenden Außennut 15, 215, 20, 220 sind das Aufnahmeelement 18, 218 und das Abgabeelement 13, 213 gegenüber der Innenfläche 19, 219 des inneren Profilrohrs 2, 202 abgedichtet, so dass eine Kolben-Zylinder-Anordnung entsteht. Zur Abdichtung sind Dichtringe 26, 26', 27, 27', 226, 226', 227, 227' vorgesehen. Alternativ kann auch eine Abdichtung durch eine Anformung des Aufnahmeelements 18, 218 und des Abgabeelements 13, 213 an die Innenfläche 19, 219 des inneren Profilrohrs 2, 202 erfolgen. Bevorzugt sind bei jeder Ausführungsform das Aufnahmeelement 18, 218 und das Abgabeelement 13, 213 aus Kunststoff hergestellt.

In dem Aufnahmeelement 18, 218 und dem Abgabeelement 13, 213 verläuft jeweils eine Bohrung 22, 222, 23, 223 zur Durchleitung von Schmiermittel. Die Bohrungen 22, 222, 23, 223 verlaufen jeweils von entgegengesetzten Seiten, d.h. diametral, des Grunds der umlaufenden Außennuten 15, 215, 20, 220 zu den axialen Enden der Elemente 18, 218, 13, 213, die einander zugewandt sind bzw. an denen der erste Schmiermittelkanal 14, 214 zur Verbindung der beiden Elemente 18, 218, 13, 213 ansetzt. Figur 1 zeigt eine erste Variante der Befestigung, bei der der erste Schmiermittelkanal 14 in die jeweilige Bohrung 22, 23 des Aufnahmeelements 18 und des Abgabeelements 13 eingepresst ist. Alternativ kann der erste Schmiermittelkanal 14 in die Elemente 18, 13 auch mittels eines separaten Anschlusselements mit Durchgangsbohrung eingepresst sein, wie für den zweiten Schmiermittelkanal 242 zur Figur 3 beschrieben wird. Die beschriebenen Varianten der Befestigung des ersten Schmiermittelkanals 14, 214 an dem Aufnahmeelement 18, 218 und dem Abgabeelement 13, 213 können bei jeder der Ausführungsformen der Erfindung Verwendung finden.

Bei der in Figur 3 gezeigten Ausführungsform verläuft die Bohrung 223 in dem Abgabeelement 213 von entgegengesetzten Seiten, d.h. diametral, des Grunds der umlaufenden Außennut 215 zu den beiden axialen Enden des Abgabeelements 213. Die Bohrung 223 hat damit einen kreuzförmigen Verlauf innerhalb des Abgabeelements 213. An dem axialen Ende, das dem ersten Schmiermittelkanal 214 abgewandt ist, ist ein zweiter Schmiermittelkanal 242 mittels eines Anschlusselements 229 mit axialer Durchgangsbohrung 240 eingepresst. Alternativ kann auch hier die oben beschriebene erste Variante der Befestigung ohne separates Anschlusselement 229 vorgesehen sein. Mit seinem anderen axialen Ende ist der zweite Schmiermittelkanal 242 an dem zu schmierenden Kreuzgelenk 204' in dem Zapfenkreuz 231 mittels eines Anschlusselements 229' mit Durchgangsbohrung 240 eingepresst und zwar vorliegend zentrisch in der Längsachse A der Teleskopwelle 201. Ein exzentrischer Anschluss kann hier alternativ vorgesehen sein. In dem Zapfenkreuz 231 ist eine kreuzförmig verlaufende Bohrung 232 zur Zuleitung von Schmiermittel nach radial außen an die zu schmierenden Bereiche vorgesehen.

Der zweite Schmiermittelkanal 242 ist längenveränderlich ausgeführt, damit bei dieser Ausführungsform, bei der sich bei Längenänderung der Teleskopwelle 201 der axiale Abstand zwischen dem Kreuzgelenk 204' und dem inneren Profilrohr 202, in dem die Schmiervorrichtung 210 aufgenommen ist, ändert, eine Längenanpassung der Schmiermittelvorrichtung 210 erfolgen kann. Der zweite Schmiermittelkanal 242 ist zur Längenänderung in einem Bereich 227 spiralförmig ausgebildet. Alternativ kann er auch ganz oder bereichsweise elastisch ausgebildet sein.

Die Ausführungsform der Figur 2 wird nachfolgende bezüglich ihrer Unterschiede zu den zuvor dargestellten Ausführungsformen beschrieben. Die Ausführungsform der Figur 2 weist ein Aufnahmeelement 118 auf, das als Art Verschlussstopfen dienend in dem axialen Ende des inneren Profilrohrs 102 einsitzt, an dem die Rillengabel 104 des weiterhin nicht dargestellten traktorseitigen Kreuzgelenks mittels der Spannhülse 128 axial unverschieblich gehalten ist. Drehfest ist die Rillengabel 104 über die Profilierung des inneren Profilrohrs 102 auf diesem gehalten. Das Aufnahmeelement 118 weist mittig und in radialer Richtung verlaufend eine Durchgangsbohrung 150 für den Durchtritt der Spannhülse 128 auf.

In dem Aufnahmeelement 118 verläuft eine Bohrung 122 zur Durchleitung von Schmiermittel. Die Bohrung 122 verläuft von einem Außenumfang des Aufnahmeelements 118 zu dem axialen Ende des Aufnahmeelements 118, das dem Inneren des inneren Profilrohrs 102 zugewandt ist. Die Bohrung 122 verläuft mit einem radialen Abschnitt 151 und einem axialen Abschnitt 152 bezogen auf die Längsachse A der Teleskopwelle 101. Der axiale Abschnitt 152 verläuft parallel versetzt zu der Längsachse A, um kollisionsfrei und seitlich versetzt zu der Durchgangsbohrung 150 und der durch diese durchtretende Spannhülse 128 zu verlaufen. Der axiale Abschnitt 152 der Bohrung 122 mündet an dem axialen Ende des Aufnahmeelements 118, an dem, wie zu den anderen Ausführungsformen beschrieben, der erste Schmiermittelkanal 114 ansetzt. In Figur 2 ist die Variante der Verbindung gezeigt, bei der der zweite Schmiermittelkanal 114 in das Aufnahmeelement 118 und das Abgabeelement 113 eingepresst ist. Die Variante mit separatem Anschlusselement kann auch hier vorgesehen sein. Infolge des beschriebenen seitlichen Versatzes des axialen Abschnitts 152 der Bohrung 122 zu der Längsachse A, verläuft der erste Schmiermittelkanal 114 ebenfalls versetzt, vorzugsweise parallel, zu der Längsachse A und die Bohrung 123 des Abgabeelements 113 verläuft von entgegengesetzten Seiten, d.h. diametral, des Grunds der umlaufenden Außennut 115 zu dem axialen Ende des Abgabeelements 113, an dem die Bohrung 123 axial versetzt zu der Längsachse A mündet. Im Übrigen ist die Ausgestaltung des Abgabeelements 113, des Verteilerkanals 116 und der Zuführkanäle 111, 111' des äußeren Profilrohrs 102 entsprechend den zuvor beschriebenen Ausführungsformen.

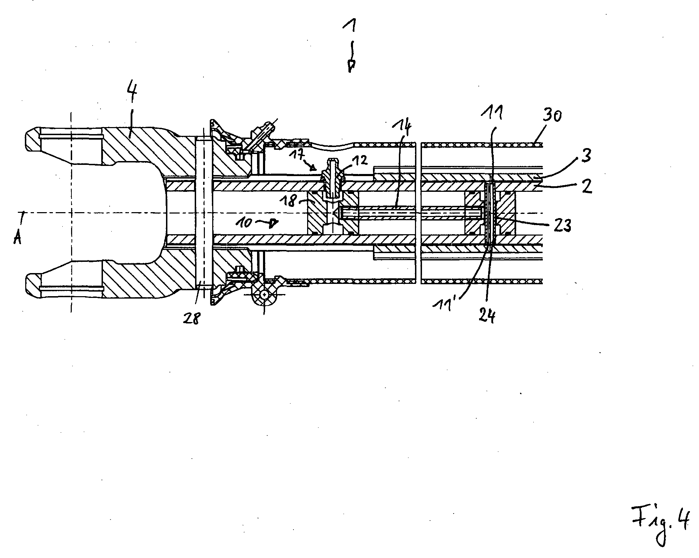

Figur 4 zeigt eine Variante der ersten Ausführungsform, bei der zur axialen Festlegung der Schmiervorrichtung 10 gegenüber dem inneren Profilrohr 2 eine Spannhülse 24 vorgesehen ist, die in den Zuführkanälen 11, 11' und in der Bohrung 23 des Abgabeelements 13 einsitzt. Diese Variante kann auch bei den anderen Ausführungsformen Verwendung finden.

Die Schmiervorrichtung 10 erstreckt sich durch den überwiegenden Teil des inneren Profilrohrs 2, 102, 202. So ist gewährleistet, dass ein Zusammenfahren der Teleskopwelle 1 nicht durch den radial hervorstehenden Schmiernippel 12, 112, 212 behindert wird und bei vollständig auseinander gefahrener Teleskopwelle 1, 101, 201 das Abgabeelement 13, 113, 213 und die Zuführkanäle 11, 11', 111, 111', 211, 211' sich noch immer in einem Bereich befinden, in dem sich das äußere und das innere Profilrohr 2, 102, 202, 3, 103, 203 überlappen, um diesem Bereich Schmiermittel zuzuführen.

Bei allen Ausführungsformen ist die Schmiervorrichtung 10, 110, 210 derart in dem inneren Profilrohr 2, 102, 202 aufgenommen und in der Teleskopwelle 1, 101, 202 integriert, dass die Vorteile der erfindungsgemäßen Zentralschmierung zum tragen kommen.

### Bezugszeichenliste

- 1: Teleskopwelle
- 2: inneres Profilrohr
- 3: äußeres Profilrohr
- 4, 4': Rillengabel
- 10: Schmiervorrichtung
- 11: Zuführkanal
- 12: Einfüllelement
- 13: Abgabeelement
- 14: erster Schmiermittelkanal
- 15: umlaufende Außennut
- 16: umlaufender Verteilerkanal
- 17: Einfüllanordnung
- 18: Aufnahmeelement
- 19: Innenfläche
- 20: umlaufende Außennut
- 21: umlaufender Aufnahmekanal
- 22: Bohrung
- 23: Bohrung
- 24: Spannhülse
- 25: Schraubverbindung
- 26, 26': Dichtring
- 27, 27': Dichtring
- 28, 28': Spannhülse
- 30: äußeres Schutzrohr
- 31: Zugangsöffnung
- 122: Bohrung
- 150: Durchgangsbohrung
- 151: radialer Abschnitt
- 152: axialer Abschnitt
- 227: spiralförmiger Bereich
- 229, 229': Anschlusselement
- 232: Bohrung
- 240: Durchgangsbohrung
- 241: Zapfenkreuz
- 242: zweiter Schmiermittelkanal
- A: Längsachse

## Patentansprüche

1. Zentralschmierung zum Schmieren einer Teleskopwelle (1, 101, 201), umfassend
eine Schmiervorrichtung (10, 110, 210) und
ein inneres Profilrohr (2, 102, 202) der Teleskopwelle (1, 101, 201), in welches die Schmiervorrichtung (10, 110, 210) einsetzbar ist und das zumindest einen Zuführkanal (11, 111, 211) zum Zuführen von Schmiermittel zu den zu schmierenden Bereichen der Teleskopwelle (1, 101, 201) aufweist,
wobei die Schmiervorrichtung (10, 110, 210)
ein Einfüllelement (12, 112, 212) zum Zuführen von Schmiermittel in die Schmiervorrichtung (10, 110, 210),
ein Abgabeelement (13, 113, 213) zur Zuteilung von Schmiermittel an die zu schmierenden Bereiche der Teleskopwelle (1, 101, 201) und
einen ersten Schmiermittelkanal (14, 114, 214) zwischen dem Einfüllelement (12, 112, 212) und dem Abgabeelement (13, 113, 213) aufweist,
**dadurch gekennzeichnet,**
**dass** das Abgabeelement (13, 113, 213) eine umlaufende Außennut (15, 115, 215) aufweist, die zusammen mit dem inneren Profilrohr (2, 102, 202) einen umlaufenden Verteilerkanal (16, 116, 216) bildet, der sowohl mit dem ersten Schmiermittelkanal (14, 114, 214) als auch mit dem Zuführkanal (11, 111, 211) kommuniziert.

2. Zentralschmierung nach Anspruch 1
**dadurch gekennzeichnet,**
**dass** die umlaufende Außennut (15, 115, 215) bezogen auf den Zuführkanal (11, 111, 211) axial fluchtend ausgerichtet ist.

3. Zentralschmierung nach Anspruch 1 oder 2,
**dadurch gekennzeichnet,**
**dass** das Einfüllelement als Schmiernippel (12, 112, 212) gestaltet ist, der vorzugsweise in dem inneren Profilrohr (2, 102, 202) aufgenommen ist.

4. Zentralschmierung nach einem der Ansprüche 1 bis 3,
**dadurch gekennzeichnet,**
**dass** eine Einfüllanordnung (17, 117, 217) vorgesehen ist, die das Einfüllelement (12, 112, 212) und ein Aufnahmeelement (18, 118, 218) umfasst.

5. Zentralschmierung nach Anspruch 4,
**dadurch gekennzeichnet,**
**dass** das Aufnahmeelement (18, 218) eine umlaufende Außennut (20, 220) aufweist, die zusammen mit den inneren Profilrohr (2, 202) einen umlaufenden Aufnahmekanal (21, 221) bildet, der sowohl mit dem ersten Schmiermittelkanal (14, 214) als auch mit dem Einfüllelement (12, 212) kommuniziert.

6. Zentralschmierung nach Anspruch 5,
**dadurch gekennzeichnet,**
**dass** das Aufnahmeelement (18, 218) zu beiden axialen Seiten der umlaufenden Außennut (20, 220) gegenüber der Innenfläche (19, 219) des inneren Profilrohrs (2, 202) abgedichtet ist.

7. Zentralschmierung nach Anspruch 5 oder 6,
**dadurch gekennzeichnet,**
**dass** das Einfüllelement (12, 212) in die umlaufende Außennut (20, 220) des Aufnahmeelements (18, 218) eingreift, um das Aufnahmeelement (18, 218) gegenüber dem inneren Profilrohr (2, 202) axial zu arretieren.

8. Zentralschmierung nach einem der Ansprüche 4 bis 7,
**dadurch gekennzeichnet,**
**dass** in dem Aufnahmeelement (18, 118, 218) eine Bohrung (22, 122, 222) zur Durchleitung von Schmierstoff verläuft, zum Verbinden des Einfüllelements (12, 112, 212) mit dem ersten Schmiermittelkanal (14, 114, 214).

9. Zentralschmierung nach einem der Ansprüche 1 bis 8,
**dadurch gekennzeichnet,**
**dass** das Abgabeelement (13, 113, 213) zu beiden axialen Seiten der umlaufenden Außennut (15, 115, 215) gegenüber der Innenfläche (19, 119, 219) des inneren Profilrohrs (2, 102, 202) abgedichtet ist.

10. Zentralschmierung nach einem der Ansprüche 1 bis 9,
**dadurch gekennzeichnet,**
**dass** in dem Abgabeelement (13, 113, 213) eine Bohrung (23, 123, 223) zur Durchleitung von Schmierstoff verläuft, zum Verbinden des ersten Schmiermittelkanals (14, 114, 214) mit dem Zuführkanal (11, 111, 211).

11. Zentralschmierung nach einem der Ansprüche 1 bis 10,
**dadurch gekennzeichnet,**
**dass** ein zweiter Schmiermittelkanal (242) zur Zuteilung von Schmierstoff an weitere zu schmierende Bereiche der Teleskopwelle (201) vorgesehen ist, zum Verbinden des Abgabeelements (213) mit den weiteren zu schmierenden Bereichen.

12. Zentralschmierung nach Anspruch 11,
**dadurch gekennzeichnet,**
**dass** in dem Abgabeelement (213) eine Bohrung (223) zur Durchleitung von Schmierstoff angeordnet ist, die ausgehend von der umlaufenden Außennut (215) zu beiden axialen Ende des Abgabeelements (213) verläuft, zum Verbinden des ersten Schmiermittelkanals (214) mit dem Zuführkanal (211) und dem zweiten Schmiermittelkanal (242).

13. Zentralschmierung nach Anspruch 11 oder 12,
**dadurch gekennzeichnet,**
**dass** die weiteren zu schmierenden Bereiche an einem Kreuzgelenk angeordnet ist, welches mit einem äußeren Profilrohr (203) verbunden ist.

14. Zentralschmierung nach einem der Ansprüche 11 bis 13,
**dadurch gekennzeichnet,**
**dass** der zweite Schmiermittelkanal (242) längenveränderlich, insbesondere spiralförmig oder elastisch ausgebildet ist.

15. Zentralschmierung nach einem der Ansprüche 1 bis 14,
**dadurch gekennzeichnet,**
**dass** das Abgabeelement (13, 113, 213) über eine Spannhülse (24), welche in dem Zuführkanal (11, 111, 211) des inneren Profilrohrs (2, 102, 202) einsitzt und in die umlaufende Außennut (15, 115, 215) des Abgabeelements (13, 113, 213) eingreift, gegenüber dem inneren Profilrohr (2, 102, 202) axial arretiert ist.

## Claims

1. Central lubrication for lubricating a telescopic shaft (1, 101, 201), comprising
a lubrication device (10, 110, 210) and
an inner profiled tube (2, 102, 202) of the telescopic shaft (1, 101, 201), into which the lubrication device (10, 110, 210) is insertable and which has at least one feed duct (11, 111, 211) for feeding lubricant to the to be lubricated portions of the telescopic shaft (1, 101, 201),
wherein the lubrication device (10, 110, 210) has
a filling element (12, 112, 212) for feeding lubricant to the lubrication device (10, 110,210),
a discharge element (13, 113, 213) for distributing lubricant to the to be lubricated portions of the telescopic shaft (1, 101, 201) and
a first lubricant duct (14, 114, 214) between the filling element (12, 112, 212) and the discharge element (13, 113, 213),
**characterised in**
**that** the discharge element (13, 113, 213) has a circumferentially extending outer groove (15, 115, 215), which forms together with the inner profiled tube (2, 102, 202) a circumferentially extending distribution duct (16, 116, 216), which communicates with the first lubricant duct (14, 114, 214) as well as the feed duct (11, 111, 211).

2. Central lubrication according to claim 1,
**characterised in**
**that** the circumferentially extending outer groove (15, 115, 215) is aligned concerning the feed duct (11, 111, 211).

3. Central lubrication according to claim 1 or 2,
**characterised in**
**that** the filling element is formed as a lubrication nipple (12, 112, 212), which is preferably accommodated in the inner profiled tube (2, 102, 202).

4. Central lubrication according to one of claims 1 to 3,
**characterised in**
**that** a filling arrangement (17, 117, 217) is provided, which comprises the filling element (12, 112, 212) and a receptacle (18, 118, 218).

5. Central lubrication according to claim 4,
**characterised in**
**that** the receptacle (18, 218) has a circumferentially extending outer groove (20, 220), which forms together with the inner profiled tube (2, 202) a circumferentially extending accommodation duct (21, 221), which communicates with the first lubricant duct (14, 214) as well as the filling element (12,212).

6. Central lubrication according to claim 5,
**characterised in**
**that** the receptacle (18, 218) is sealed at both axial sides of the circumferentially extending outer groove (20, 220) to the inner face (19, 219) of the inner profiled tube (2, 202).

7. Central lubrication according to claim 5 or 6,
**characterised in**
**that** the filling element (12, 212) engages in the circumferentially extending outer groove (20, 220) of the receptacle (18, 218), to axially retain the receptacle (18, 218) relative to the inner profiled tube (2, 202).

8. Central lubrication according to one of claims 4 to 7,
**characterised in**
**that** a bore (22, 222) extends in the receptacle (18, 118, 218) for transmitting a lubricant, to connect the filling element (12, 112, 212) to the first lubricant duct (14, 114, 214).

9. Central lubrication according to one of claims 1 to 8,
**characterised in**
**that** the discharge element (13, 113, 213) is sealed at both axial sides of the circumferentially extending outer groove (15, 115, 215) relative to the inner face (19, 119, 219) of the inner profiled tube (2, 102, 202).

10. Central lubrication according to one of claims 1 to 9,
**characterised in**
**that** a bore (23, 123, 223) extends in the discharge element (13, 113, 213) for transmitting lubricant, to connect the first lubricant duct (14, 114, 214) to the feed duct (11, 111, 211).

11. Central lubrication according to one of claims 1 to 10,
**characterised in**
**that** a second lubricant duct (242) is provided for distributing lubricant to additional portions of the telescopic shaft (201), to be lubricated, to connect the discharge element (213) to the additional portions, to be lubricated.

12. Central lubrication according to claim 11,
**characterised in**
**that** a bore (223), which extends starting from the circumferentially extending outer groove (215) to both axial ends of the discharge element (213), is arranged in the discharge element (213) for transmitting lubricant, to connect the first lubricant duct (214) to the feed duct (211) and to the second lubricant duct (242).

13. Central lubrication according to claim 11 or 12,
**characterised in**
**that** the additional portions, to be lubricated, are arranged on a universal joint, which is connected to an outer profiled tube (203).

14. Central lubrication according to one of claims 11 to 13,
**characterised in**
**that** the second lubricant duct (242) is length adjustable, especially formed spiral-like or elastic.

15. Central lubrication according to one of claims 1 to 14,
**characterised in**
**that** the discharge element (13, 113,213) is axially locked via a clamping sleeve (24) relative to the inner profiled tube (2, 102, 202), which clamping sleeve (24) rests in the feed duct (11, 111, 211) of the inner profiled tube (2, 102, 202) and engages the circumferentially extending groove (15, 115, 215) of the discharge element (13, 113, 213).

## Revendications

1. Graissage centralisé, destiné à graisser un arbre télescopique (1, 101, 201), comprenant
un graisseur (10, 110, 210) et
un tube profilé (2, 102, 202) interne de l'arbre télescopique (1, 101, 201) dans lequel le graisseur (10, 110, 210) est insérable et qui comporte au moins un canal d'alimentation (11, 111, 211) destiné à alimenter du lubrifiant vers les zones à graisser de l'arbre télescopique (1, 101, 201),
le graisseur (10, 110, 210) comportant
un élément de remplissage (12, 112, 212), destiné à alimenter du lubrifiant dans le graisseur (10, 110, 210),
un élément distributeur (13, 113, 213), pour attribuer du lubrifiant aux zones à graisser de l'arbre télescopique (1, 101, 201) et
un premier canal (14, 114, 214) à lubrifiant entre l'élément de remplissage (12, 112, 212) et l'élément distributeur (13, 113, 213),
**caractérisé en ce que**
l'élément distributeur (13, 113, 213) comporte une rainure extérieure (15, 115, 215) périphérique, qui en association avec le tube profilé (2, 102, 202) interne forme un canal distributeur (16, 116, 216) périphérique qui communique aussi bien avec le premier canal (14, 114, 214) à lubrifiant, qu'également avec le canal d'alimentation (11, 111, 211).

2. Graissage centralisé selon la revendication 1,
**caractérisé en ce que**
la rainure extérieure (15, 115, 215) périphérique est orientée en alignement axial par rapport au canal d'alimentation (11, 111, 211).

3. Graissage centralisé selon la revendication 1 ou la revendication 2,
**caractérisé en ce que**
l'élément de remplissage est conçu en tant que raccord fileté de graissage (12, 112, 212) qui est logé de préférence dans le tube profilé (2, 102, 202) interne.

4. Graissage centralisé selon l'une quelconque des revendications 1 à 3,
**caractérisé en ce**
**qu'**il est prévu un dispositif de remplissage (17, 117, 217) qui comprend l'élément de remplissage (12, 112, 212) et un élément de logement (18, 118, 218).

5. Graissage centralisé selon la revendication 4,
**caractérisé en ce que**
l'élément de logement (18, 218) comporte une rainure extérieure (20, 220) périphérique, qui en association avec le tube profilé (2, 202) interne forme un canal de logement (21, 221) périphérique, qui communique aussi bien avec le premier canal (14, 214) à lubrifiant qu'également avec l'élément de remplissage (12, 212).

6. Graissage centralisé selon la revendication 5,
**caractérisé en ce que**
l'élément de logement (18, 218) est étanchéifié vers les deux côté axiaux de la rainure extérieure (20, 220) périphérique par rapport à la surface intérieure (19, 219) du tube profilé (2, 202) interne.

7. Graissage centralisé selon la revendication 5 ou la revendication 6,
**caractérisé en ce que**
l'élément de remplissage (12, 212) s'engage dans la rainure extérieure (20, 220) périphérique de l'élément de logement (18, 218), pour arrêter l'élément de logement (18, 218) par rapport au tube profilé (2, 202) interne.

8. Graissage centralisé selon l'une quelconque des revendications 4 à 7,
**caractérisé en ce que**
dans l'élément de logement (18, 118, 218) s'étend un alésage (22, 122, 222) pour le passage de lubrifiant, destiné à relier l'élément de remplissage (12, 112, 212) avec le premier canal (14, 114, 214) à lubrifiant.

9. Graissage centralisé selon l'une quelconque des revendications 1 à 8,
**caractérisé en ce que**
des deux côtés axiaux de la rainure extérieure (15, 115, 215) périphérique, l'élément distributeur (13, 113, 213) est étanchéifié par rapport à la surface interne (19, 119, 219) du tube profilé (2, 102, 202) interne.

10. Graissage centralisé selon l'une quelconque des revendications 1 à 9,
**caractérisé en ce que**
dans l'élément distributeur (13, 113, 213) s'étend un alésage (23, 123, 223) pour le passage de lubrifiant, destiné à relier le premier canal (14, 114, 214) à lubrifiant avec le canal d'alimentation (11, 111, 211).

11. Graissage centralisé selon l'une quelconque des revendications 1 à 10,
**caractérisé en ce**
**qu'**il est prévu un deuxième canal (242) à lubrifiant, pour attribuer du lubrifiant à des zones supplémentaires à graisser de l'arbre télescopique (201), destiné à relier l'élément distributeur (213) avec les zones supplémentaires à graisser.

12. Graissage centralisé selon la revendication 11,
**caractérisé en ce que**
dans l'élément distributeur (213) est placé un alésage (223) pour le passage de lubrifiant, qui à partir de la rainure extérieure (215) périphérique s'étend vers les deux extrémités axiales de l'élément distributeur (213), pour relier le premier canal (214) à lubrifiant avec le canal d'alimentation (211) et avec le deuxième canal (242) à lubrifiant.

13. Graissage centralisé selon la revendication 11 ou la revendication 12,
**caractérisé en ce que**
les zones supplémentaires à graisser sont placées sur un joint de Cardan, lequel est relié avec un tube profilé (203) externe.

14. Graissage centralisé selon l'une quelconque des revendications 11 à 13,
**caractérisé en ce que**
le deuxième canal (242) à lubrifiant est conçu à longueur variable, notamment en forme de spirale ou élastique.

15. Graissage centralisé selon l'une quelconque des revendications 1 à 14,
**caractérisé en ce que**
par l'intermédiaire d'une douille de serrage (24) qui est enchâssée dans le canal d'alimentation (11, 111, 211) du tube profilé (2, 102, 202) interne et qui s'engage dans la rainure extérieure (15, 115, 215) périphérique de l'élément distributeur (13, 113, 213), l'élément distributeur (13, 113, 213) est arrêté en direction axiale par rapport au tube profilé (2, 102, 202) interne.
